(19) Europäisches Patentamt
European Patent Office
Office européen des brevets

(11) **EP 4 557 593 B1**

(12) **EUROPEAN PATENT SPECIFICATION**

(45) Date of publication and mention
of the grant of the patent:
**15.07.2026 Bulletin 2026/29**

(21) Application number: **23210776.3**

(22) Date of filing: **17.11.2023**

(51) International Patent Classification (IPC):
*H02M 1/00* (2006.01)    *H02M 1/32* (2007.01)
*H02M 7/68* (2006.01)    *H02J 3/36* (2026.01)

(52) Cooperative Patent Classification (CPC):
**H02M 1/0016; H02M 1/0025; H02M 1/32;**
**H02M 7/68;** H02J 3/36

(54) **IMPROVEMENTS RELATING TO PROVIDING GRID-FORMING CONTROL OF A POWER CONVERTER IN POWER TRANSMISSION NETWORKS**

VERBESSERUNGEN IM ZUSAMMENHANG MIT DER BEREITSTELLUNG EINER NETZBILDUNGSSSTEUERUNG EINES STROMWANDLERS IN STROMÜBERTRAGUNGSNETZEN

AMÉLIORATIONS RELATIVES À LA FOURNITURE D'UNE COMMANDE DE FORMATION DE RÉSEAU D'UN CONVERTISSEUR DE PUISSANCE DANS DES RÉSEAUX DE TRANSMISSION DE PUISSANCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**21.05.2025 Bulletin 2025/21**

(73) Proprietor: **GE Vernova Technology GmbH**
**5400 Baden (CH)**

(72) Inventors:
• **BARKER, Carl**
**Stafford, ST16 1WS (GB)**
• **ADAMCZYK, Andrzej**
**Stafford, ST16 1WS (GB)**

(74) Representative: **Openshaw & Co.**
**8 Castle Street**
**Farnham, Surrey GU9 7HR (GB)**

(56) References cited:
**US-A1- 2022 090 578**

• **D'ARCO SALVATORE ET AL: "Improving the Power Reference Tracking of Virtual Synchronous Machines by Feed-Forward Control", 2021 IEEE 19TH INTERNATIONAL POWER ELECTRONICS AND MOTION CONTROL CONFERENCE (PEMC), IEEE, 25 April 2021 (2021-04-25), pages 102 - 107, XP033916275, DOI: 10.1109/PEMC48073.2021.9432548**

**Description**

<u>Field</u>

The subject matter herein relates generally to the field of power transmission networks and more specifically to a method of operating a controller, and a controller, for providing grid-forming control of a power converter connected to a grid.

<u>Introduction</u>

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e., the transmission line or cable, and reduces the cost per kilometer of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilized where it is necessary to interconnect DC and AC networks. In any such power transmission network, power conversion means, also known as converters (i.e., power converters in converter stations), are required at each interface between AC and DC power to effect the required conversion from AC to DC or from DC to AC.

When converting DC power to AC power, for example, at an interface between a DC transmission line and an AC grid, a power converter may be operated in a grid-following mode (GFL) or a grid-forming mode (GFM).

In the GFL mode, the power converter utilizes fast current-regulation loops to control active and reactive power exchanged with the AC grid. The power converter uses a current reference from the AC grid for the active component of current to achieve a desired power output. Accordingly, a power converter operating in a GFL mode includes functions that manage the voltage and reactive power in a manner that results in a command for the reactive component of current. Wide-bandwidth current regulators then develop commands for voltage to be applied by the power converter to the AC grid, such that the actual currents closely track the commands. A power converter operating in a GFL mode therefore provides a current-source characteristic.

Alternatively, a power converter operating in a GFM mode provides a voltage-source characteristic, where the phase angle and magnitude of the voltage are controlled to achieve the regulation functions demanded by the grid. With this structure, current will flow according to the demands of the grid while the converter contributes to establishing a voltage and frequency for the grid. This characteristic is comparable to conventional generators based on a turbine driving a synchronous machine.

To be effective, grid-forming resources should be able to maintain an internal voltage phasor that does not move quickly when there are changes in grid conditions, e.g. sudden addition/removal of loads, opening or closing of grid connections that lead to phase jumps and/or rapid change of frequency. In other words, the power from the power converter should be able to change suddenly to stabilize the grid, with a subsequent slow reset to power being commanded from a higher-level control function. In addition, the grid forming resource should be able to rapidly enforce power limits that exist due to constraints on the power-handling portions of the device, e.g. DC voltages/currents in a battery, solar array, and/or wind generating system. Such a response is preferable for mitigating severe disturbances on the grid, e.g. faults where power limits will be dynamically adjusted to coordinate with grid conditions for secure recovery from the fault. Further, the grid forming resource should be able to rapidly follow changes in commands from higher-level controls, e.g. for damping mechanical vibrations in a wind turbine.

In certain conventional systems, the aforementioned issues may be solved by determining a feedforward signal as a function of one or more power demands, one or more control signals, and one or more estimated electrical conditions of an inverter-based resource, and using the feedforward signal to position at least one control angle of the inverter-based resource to an anticipated value needed to achieve the one or more reference commands, thereby enabling rapid response to the one or more reference commands received from the external controller.

XP033916275 (D'ARCO SALVATORE ET AL, "Improving the Power Reference Tracking of Virtual Synchronous Machines by Feed-Forward Control") and US2022/090578 A1 relate to methods for grid-forming control using a power feed-forward power angle calculated based on a power reference.

<u>Summary</u>

The present inventors have realised that, to be even more effective, the feedforward term should accurately track changes in the power demand, regardless of the electrical characteristics of the AC grid (for example an impedance of the AC grid). There thus remains scope in providing improvements to grid-forming control of a power converter in power transmission networks.

According to a first aspect, there is provided a method of operating a controller for providing grid-forming control of a power converter connected to a grid, the method comprising determining, by an adjustment module of the controller, an adjustment value based on a measured power and a feedforward signal, wherein the measured power is indicative of an amount of power output from the power converter; determining, by a feedforward module of the controller, the feedforward signal based on a power demand and the adjustment value, wherein the power demand is indicative of a demand for an amount of power to be output from the power converter; wherein the adjustment module and the feedforward module form a first closed-loop control system to determine the feedforward signal, such that the feedforward signal is automatically adjusted to compensate for differences in the power demand and the measured power during a change in the power demand; and determining, by the controller, a phase angle command for the power converter based on the feedforward signal.

Because the adjustment module and the feedforward module form a closed-loop control system to determine the feedforward signal, the phase angle command provided to the power converter tends to improve the capability of the power converter to output power (the measured power) that tracks changes in the power demand closely and accurately. In other words, the power converter tends to be more effective in providing the desired changes in output power when operating in a grid-forming mode.

In some embodiments, the method further comprises determining, by a control module in the controller, a first control signal, based on the power demand, the measured power, and a measured frequency, wherein the measured frequency is a measure of a frequency component of the AC grid; and determining, by the controller, the phase angle command for the power converter based on the feedforward signal and the first control signal.

In some embodiments the method further comprises transforming, by a first transformation module of the controller, the feedforward signal, and outputting a transformed feedforward signal; summing, by a summing component of the controller, the first control signal with the transformed feedforward signal, and outputting a second control signal; and determining, by the controller, the phase angle command based on the second control signal, such that the power converter is able to track changes in the power demand as well as power changes in the AC grid.

By using the feedforward signal and the first control signal to determine the phase angle command, the power converter tends to be able to respond effectively to changes in the power demand and changes in the AC grid.

In some embodiments, the method further comprises determining, by a second transformation module of the controller, the phase angle command by transforming the second control signal, and outputting the phase angle command to the power converter.

In some embodiments, the control module comprises a second closed-loop control system including an integral term.

In some embodiments, the adjustment module implements an equation comprising: multiplying a grid voltage with a power converter voltage and the sine of the feedforward signal to determine a first product, and then dividing the first product by the measured power; wherein the grid voltage is indicative of a voltage at a connection point between the power converter and the grid, and the power converter voltage is indicative of an output voltage of the power converter.

In some embodiments, the feedforward module implements an equation comprising summing a converter impedance with the adjustment value to determine a third product; multiplying the third product by the power demand to determine a fourth product; multiplying the power converter voltage by a grid voltage (Vt) to determine a fifth product; dividing the fourth product by the fifth product to determine a sixth product; and determining the arcsine of the sixth product; wherein the grid voltage is indicative of a voltage at a connection point between the power converter and the grid, and the power converter voltage is indicative of an output voltage of the power converter.

In some embodiments, the method further comprises comparing, by a comparator in the controller, the adjustment value with a threshold value.

In some embodiments, the method further comprises enabling or disabling the adjustment module based on the comparison.

In some embodiments, the enabling or disabling the adjustment module is done by the controller.

In some embodiments, the enabling or disabling the adjustment module is done by the comparator in the controller.

In some embodiments, if the adjustment value is equal to or below the first threshold value, then the comparator forwards the adjustment value, determined by the adjustment module, to the feedforward module, and thereby enables the adjustment module.

In some embodiments, if the adjustment value is above the first threshold value, then the comparator updates the adjustment value to a reference value or to zero, and forwards the updated adjustment value to the feedforward module, and thereby disables the adjustment module.

In some embodiments the enabling or disabling of the adjustment module is further determined based on a hysteresis, such that the adjustment module is disabled if the adjustment value is above a second threshold value, and the adjustment module is enabled if the adjustment value is equal to or below a third threshold.

According to a second aspect, there is provided a controller providing grid-forming control of a power converter connected to a grid, the controller comprising an adjustment module configured to determine an adjustment value based on a measured power and a feedforward signal, wherein the measured power is indicative of the amount of power output from the power converter; and a feedforward module configured to determine the feedforward signal based on a power demand and the adjustment value, wherein the power demand is indicative of a demand for an amount of power to be output from the power converter; wherein the adjustment module and the feedforward module form a first closed-loop control system configured to determine the feedforward signal, such that the feedforward signal is automatically adjusted to compensate for differences between the power demand and the measured power during a change in the power demand; and the controller is further configured to determine a phase angle command for the power converter based on the feedforward signal.

Generally, the controller tends to be configured to execute the methods described herein.

In some embodiments, the controller further comprises a control module configured to determine a first control signal, based on the power demand, the measured power, and a measured frequency, wherein the measured frequency is a measure of a frequency component of the AC grid; and a first transformation module configured to transform the feedforward signal to a transformed feedforward signal; wherein the controller is further configured to sum the first control signal with the transformed feedforward signal to output a second control signal, and determine the phase angle command based on the second control signal, such that the power converter is able to track changes in the power demand as well as power changes in the AC grid.

In some embodiments, the controller further comprises a comparator configured to compare the adjustment value with a threshold value; wherein if the adjustment value is equal to or below the threshold value, then the comparator is configured to forward the adjustment value, determined by the adjustment module, to the feedforward module, and thereby enable the adjustment module; and wherein if the adjustment value is above the threshold value, then the comparator is configured to update the adjustment value to a reference value or to zero, and forward the updated adjustment value to the feedforward module, and thereby disable the adjustment module.

According to a third aspect, there is provided a power converter comprising a DC side for connection to a DC source; an AC side for connection to an AC grid; and the controller of the second aspect.

In some embodiments, the AC grid is one or more of: a consumer network; an islanded generation network; or an islanded load.

In some embodiments, the DC source is a HVDC transmission system.

According to a fourth aspect, there is provided a computer program comprising instructions which when executed by a processor of a controller for controlling a power converter, cause the controller to perform the method of the first aspect.

According to a fifth aspect, there is provided a non-transitory computer-readable storage medium comprising the computer program of the fourth aspect.

It will be appreciated that particular features of different aspects of the invention share the technical effects and benefits of corresponding features of other aspects of the invention. More specifically, the controller, the power converter, the computer program, and the non-transitory computer-readable medium, share the technical effects and benefits of the method of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

Brief description of the drawings

Embodiments of the invention will now be described by way of example only and with reference to the accompanying drawings, in which:

Figure 1 is a schematic illustration of an example of a power converter connected between a DC source and an AC grid;
Figure 2 is a schematic illustration of a controller;
Figure 3 is a graph showing a power demand, and the power output from a converter operated with and without a feedforward term;
Figure 4 is a graph showing a power demand, and a converter power output for a strong AC system and a weak AC system;

Figure 5 is a graph showing a power demand to a power converter connected to a weak AC grid, and the power output from the power converter when operated according to a conventional method, and the power output from the power converter when operated according to the method disclosed herein.

Detailed description

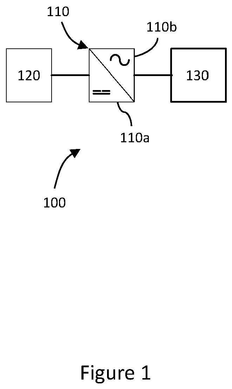

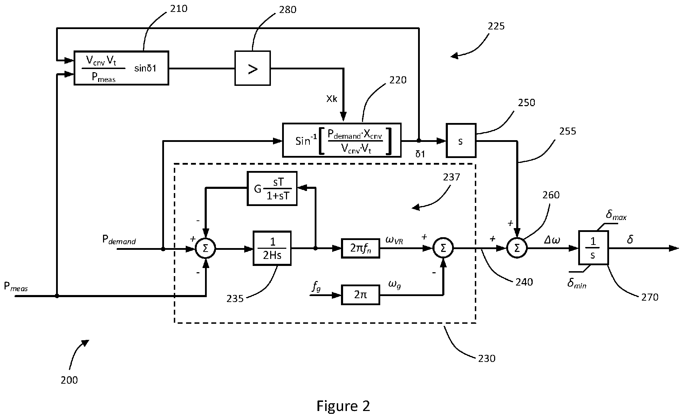

Figure 1 is a schematic illustration of an example DC transmission system node 100 including a power converter 110 connected between a DC source 120 and an AC grid 130. The illustration is not intended to be limited to representing a particular interconnect, but is moreover provided as a generic example illustrating principles of operation of an interconnect that are useful for understanding the invention. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the DC transmission system node 100 and herein discussed can be applied to interconnects comprising the controller 200 shown in Figure 2, or power converters or networks operated using the controller 200.

The DC transmission system node 100 comprises a first inverter-based resource 110 (also known as a power converter 110). The power converter 110 is configured to convert DC power to AC power, acting essentially as an inverter, or to convert AC power to DC power, acting as a rectifier. In other words, the power converter 110 can perform bi-directional power conversion. The power converter 110 may comprise a single converter in the case of a monopole system, or two converters in the case of a bipole system. The power converter 110 may represent a plurality of converter stations arranged as a multi-terminal power transmission system. In this example, the power converter 110 comprises a DC side 110a and an AC side 110b.

The power converter 110 is connected to the DC source 120. The DC source 120 is connected to the DC side 110a of the power converter 110.

The power converter 110 is connected to the AC grid 130. The AC grid 130 is connected to the AC side 110b of the power converter 110.

The DC source 120 and/or the AC grid 130 may be electrical power transmission systems comprising power generation apparatus, transmission apparatus, distribution apparatus, and electrical loads. The DC source 120 may be part of a HVDC transmission system. The AC grid 130 may be a consumer network. By way of non-limiting example, the DC source 120 is part of a HVDC transmission system, with the AC grid 130 being a consumer network, for instance.

The AC grid 130 can be of any size and, due to operational factors, can have changing electrical characteristics. In particular, the AC grid 130 can have a 'strength' characteristic, which may be as defined, from an impedance point of view, in CIGRE TB 68, "Guide for Planning DC Links Terminating at AC Systems Locations having Low Short-Circuit Capabilities; Part 1: ACDC Interaction Phenomena", June 1992. The 'strength' of an AC system may be determined by the ratio of the AC system short circuit capacity to DC link power (also known as 'short circuit ratio', SCR). A 'weaker' system may have a lower ratio of AC system short circuit capacity to DC link power, for instance an SCR value of less than 2. A 'stronger' system may have a higher ratio of AC system short circuit capacity to DC link power, for instance a SCR value of greater than 3. In other words, a strong AC system may have a low amount of impedance between a DC source and the AC system, whereas a weak AC system may have a high amount of impedance between a DC source and the AC system. These definitions, as are known in the art to the skilled person, are used herein when referring to a weak AC system and a strong AC system.

In the example disclosed in Figure 1, the AC grid 130 can be a weak AC system or a strong AC system, or can change from a weak system to a strong system during operation of the AC grid 130, or vice versa. A change in the strength of the AC grid 130 may happen a result of changes in the AC grid 130, for example the disconnection or connection of a high impedance load. Because there is no limitation of the size of the AC grid 130, the strength of the AC grid 130 may, and in practice will, change during operation of the AC grid 130. It is therefore desirable for the power converter 110 to operate in a manner that supports the AC grid 130 regardless of whether the AC grid 130 is a strong AC system or a weak AC system.

The operation of the DC transmission system node 100 can be generically described as follows. The DC power source 120 either provides or consumes DC power to or from the power converter 110 at the DC side 110a. The power converter 110 converts the received DC power to AC power for the AC grid 130, thereby acting as an inverter. Alternatively, the power converter 110 converts received AC power from the AC grid 130 to DC power, to be absorbed by the DC power source 120, thereby acting as a rectifier. Following the example that the DC power source 120 provides power to the power converter 110, the AC power output from the power converter 110 is transmitted from the AC side 110b to the AC grid 130 for consumption, for instance.

It will be appreciated that various other electrical components may be located at any particular location or with any particular feature/component in the example DC transmission system node 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multilevel voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or aluminium) surrounded by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the DC transmission system node 100 may be used with three-phase power systems. In a three-phase power system, three conductors supply respective first, second and third phases of AC power to a consumer.

Figure 2 is a schematic illustration showing an embodiment of a controller 200 as may be used in implementing the methods described herein, in order to control the power converter 110 shown in Figure 1 to operate in a grid-forming mode.

As shown in Figure 2, the controller 200 comprises an adjustment module 210, a feedforward module 220, a control module 230, a first transformation module 250, a summing component 260, and a second transformation module 270. Additionally, the controller 200 receives a power demand $P_{demand}$, a measured power $P_{meas}$, and a measured frequency $f_g$, each of which are discussed further below.

The power demand $P_{demand}$ is a demand for an amount of power to be output from the power converter 110. The measured power $P_{meas}$ is an amount of power output from the power converter 110. The measured frequency $f_g$ is a measure of a frequency component of the AC grid 130. The power demand $P_{demand}$, the measured power $P_{meas}$ and measured frequency $f_g$ are provided to the control module 230. The control module 230 performs processing and outputs a first control signal 240 to the summing component 260.

The power demand $P_{demand}$ is provided to the feedforward module 220. The feedforward module 220 receives the power demand $P_{demand}$ and an adjustment value $X_k$, performs processing, and outputs a feedforward signal $\delta 1$.

The feedforward module 220 outputs the feedforward signal $\delta 1$ to the adjustment module 210. The measured power $P_{meas}$ is also provided to the adjustment module 210. The adjustment module 210 receives the measured power $P_{meas}$ and the feedforward signal $\delta 1$, performs processing, and outputs the adjustment value $X_k$. The adjustment value $X_k$ is provided to the feedforward module 220. In this manner, the feedforward module 220 and the adjustment module 210 form a first closed-loop control system 225.

The feedforward module 220 also outputs the feedforward signal $\delta 1$ to the first transformation module 250. The first transformation module 250 receives the feedforward signal $\delta 1$, performs processing, and outputs a transformed feedforward signal 255 to the summing component 260.

The summing component 260 sums the transformed feedforward signal 255 and the first control signal 240, and outputs the result as a second control signal $\Delta\omega$ to the second transformation module 270.

The second transformation module 270 receives the second control signal $\Delta\omega$, performs processing, and outputs a phase angle command $\delta$ for providing grid-forming control to the power converter 110.

Although not shown in Figure 2, the controller 200 may comprise a memory and at least one processor. The memory may comprise computer-readable instructions, which when executed by the at least one processor, cause the controller 200 to perform the method(s) described herein.

Also, although not shown in Figure 2, the controller 200 may further comprise a transceiver apparatus. The transceiver apparatus may comprise a separate transmitter and receiver. The transceiver apparatus may be used to operatively communicate with other components described herein either directly, using a wired or wireless means, or via a further interface such as a network interface. The transceiver apparatus may for instance send and receive control signals using the transmitter and receiver. The control signals may contain or define electrical control parameters such as reference currents or reference voltages.

The at least one processor may be capable of executing computer-readable instructions and/or performing logical operations. The at least one processor may be a microcontroller, microprocessor, central processing unit (CPU), field programmable gate array (FPGA) or similar programmable controller. The controller 200 may further comprise a user input device and/or output device. The processor may be communicatively coupled to the memory and to the transceiver.

The memory may be a computer readable storage medium. For instance, the memory may include a non-volatile computer storage medium. For example, the memory may include a hard disk drive, flash memory, etc.

Also, although not shown in Figure 2, the controller 200 may additionally include a user input device interface and/or a user output device interface, which may allow for visual, audible or haptic inputs/outputs. Examples of such user input/output devices include, but are not limited to, interfaces to electronic displays, touchscreens, keyboards, mice, speakers and microphones.

As discussed above, in the example disclosed, the power converter 110 is operating a GFM mode. Aspects of the disclosure provide improvements when the power converter 110 is operating in a GFM mode, as will now be discussed.

In order to achieve grid-forming control, the control module 230 of the controller 200 implements a second closed-loop control system 237 which includes an integral function 235. During a steady-state condition, a power demand $P_{demand}$ is provided to the control module 230 and the measured power $P_{meas}$ is closely matched, or is the same as, the power demand $P_{demand}$.

The power demand $P_{demand}$ is a demand for an amount of power to be output from the power converter 110. The measured power $P_{meas}$ is an amount of power output from the power converter 110.

If a voltage vector of the AC grid 130 changes because of, for example, an AC grid 130 load switch event or generator switch, the control module 230 will detect the change in the measured power $P_{meas}$ and the measured frequency $f_g$. frequency $f_g$ is a measure of a frequency component of the AC grid 130.

The second closed-loop control system 237 in the control module 230 determines a first control signal 240, which will maintain an internal voltage vector of the power converter 110. The active power flow between the power converter 110 and the AC grid 130 will, therefore, rapidly change because of an angular difference between the power converter 110 and the AC grid 130. The new power flow is only intended to be temporary and hence the (synchronous grid-forming) controller 200 will modify its internal voltage vector to restore the pre-disturbance conditions or a modified steady-state based on the new AC grid 130 frequency if the controller 200 incorporates a frequency droop function. The time-period over which this modification will be achieved will be a parameter defined by the integral function 235.

A limitation of the control module 230 is that it may have a poor ability to track a change in the power demand $P_{demand}$. This problem is addressed by conventional controllers by circumventing the slow inertial response of the control module 230 (which arises as a result of the integral function 235), to directly modify the phase angle command $\delta$ of the power converter 110 as a function of the power demand $P_{demand}$ applied to the power converter 110. The basic concept is based on the transfer equation shown below as Equation 1.

$$P_{demand} = V_{cnv} \times V_{thev} \times \frac{\sin(\theta_{Vcnv} - \theta_{Vthev})}{X_{cnv} + X_{thev}}$$

Equation 1

Where: $P_{demand}$ is a demand for an amount of power to be output from the power converter 110: $V_{cnv}$ is the output voltage of the power converter 110; $V_{thev}$ is the Thévenin equivalent voltage of the AC grid 130; $\theta_{cnv}$ is the angle of the power converter 110 output voltage; $\theta_{thev}$ is the angle of the Thévenin equivalent AC grid 130 voltage; $X_{cnv}$ is the power converter 130 impedance; and $X_{thev}$ is the Thévenin equivalent impedance of the AC grid 130.

In practice, however, the Thévenin equivalent of the AC grid 130 may not be known. To overcome this, an assumption can be made that the value of $X_{thev}$ is negligible (as discussed further below). This essentially allows Equation 1 to be simplified to that shown in Equation 2.

$$P_{demand} = V_{cnv} \times V_t \times \frac{\sin(\theta_{Vcnv} - \theta_t)}{X_{cnv}}$$

Equation 2

Where: $V_t$ is a voltage at the power converter 110 point of connection to the AC grid 130; and $\theta_t$ is the angle of the voltage at the power converter point of connection to the AC grid 130.

Equation 2 tends to be more practical, as the quantities $V_t$ and $\theta_t$ are directly measurable at the power converter 110. A further simplification can be made if it is assumed that $V_{cnv}$ and $V_t$ are, in the steady-state condition, both equal to 1.0 pu.

The feedforward module 220 and the resultant feedforward signal $\delta 1$, as shown in Figure 2, are thus an implementation of a feedforward term based on a re-arranged Equation 2. Furthermore, an additional simplification can be made, noting that, typically the AC grid 130 voltage will be near 1.0pu. Hence, if required, for example to improve computation time, it can be assumed that $V_t$ and $V_{cnv}$ are equal to 1.0.

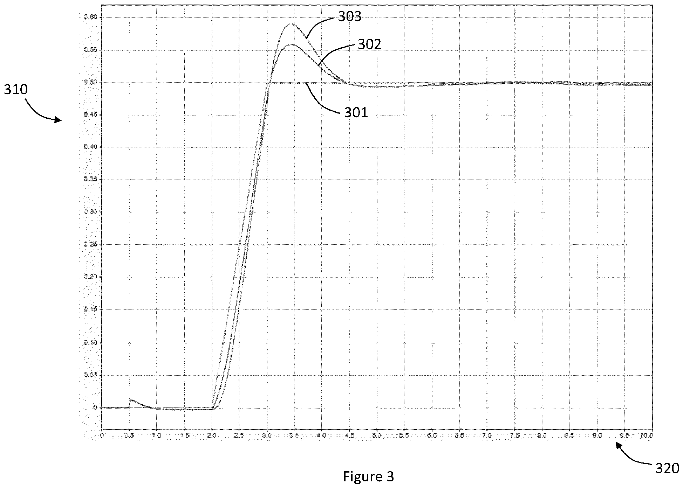

Figure 3 shows a first plot 301 of the power demand $P_{demand}$ to the power converter 110, a second plot 302 of the measured power $P_{meas}$ output from the power converter 110 with the feedforward module 220 active, and a third plot 303 of the measured power $P_{meas}$ output from the power converter 110 both with the feedforward module 220 not active. In Figure 3, the x-axis 320 is time in seconds and the y-axis 310 is power in per unit. As can be seen, a power converter 110 controlled with the feedforward module 220 tends to actively track changes in the power demand $P_{demand}$ better than a power converter 110 controlled without the feedforward module 220 active.

Additionally, the feedforward module 220 and the resultant feedforward signal $\delta 1$ can also be used to accelerate a recovery of the power converter 110 following a clearance of a fault on the AC grid 130 (i.e., the time taken to restore the power demand $P_{demand}$).

The feedforward module 220 outputs the feedforward signal $\delta 1$ to the first transformation module 250, which applies a transformation, for example a Laplace transform, to the feedforward signal $\delta 1$. The transformation transforms the feedforward signal $\delta 1$ from an angle to a rotational speed, and the output is a transformed feedforward signal 255, which the first transformation module 250 provides to the summing component 260.

The summing component 260 sums the first control signal 240 and the transformed feedforward signal 255. By summing the first control signal 240 and the transformed feedforward signal 255. In this manner, the signal with the larger magnitude can, and in practice will, dominate the phase angle command $\delta$. This tends to allow the controller 200 to track changes in the power demand as well as power changes in the grid.

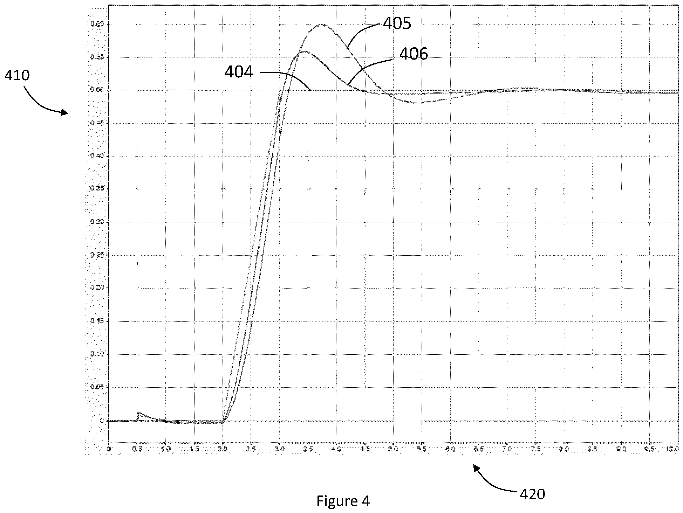

In a 'strong' AC system (as discussed above), the value of $X_{thev}$ in Equation 1 is small and hence the assumptions introduced by Equation 2 (of neglecting $X_{thev}$) are generally correct. As such, in a strong AC system, neglecting $X_{thev}$ tends not to significantly change or impact the resulting ability of the power converter 110 to track a ramp in the power demand $P_{demand}$ when using the feedforward module 220. However, in applications where the AC system strength is low or weak (as discussed above), the value of $X_{thev}$ is not negligible. In this case, the feedforward module 220 and the resultant feedforward signal $\delta 1$ may fail to effectively track a ramp in the power demand $P_{demand}$. This is shown schematically in Figure 4, which shows a fourth plot 404 of a power demand $P_{demand}$ provided to a power converter 110, a fifth plot 405 of a measured power $P_{meas}$ output from the power converter 110 (with the feedforward module 220 active) for a weak AC system, and a sixth plot 406 of a measured power $P_{meas}$ output from the power converter 110 (with the feedforward module 220 active) for a strong AC system. In Figure 4, the x-axis 420 is time in seconds and the y-axis 410 is power in per unit. As can be seen, there is more overshoot and resonance in the weak AC system compared to the strong AC system. Thus, for a weak AC system, the feedforward module 220 and the resultant feedforward signal $\delta 1$ fail to track a ramp or change in the power demand $P_{demand}$ effectively.

It is an objective of the disclosure to overcome the aforementioned problem, or, in other words, to provide improvements in tracking a ramp in a power demand $P_{demand}$ effectively.

Referring again to Figure 2, the controller 200 comprises the adjustment module 210. A general operating principle of the adjustment module 210 is that the adjustment module 210 makes a correction for an error between an expected power demand $P_{demand}$ and the measured power $P_{meas}$, to improve the active power ramp tracking.

To achieve this, the adjustment module 210 in the controller 200 uses the measured power $P_{meas}$, and from this, by manipulating Equation 2, an adjustment value $X_k$ can be derived as shown in Equation 3.

$$X_k = \left[ V_{cnv} \times V_t \times \frac{\sin(\delta 1)}{P_{meas}} \right] - X_{cnv}$$

Equation 3

The adjustment module 210 thus implements Equation 3, rearranged to resolve for the adjustment value $X_k$. However, as can be seen, in order to fully implement Equation 3, a value for the feedforward signal $\delta 1$ must be determined. The adjustment module 210 thus receives a value for the feedforward signal $\delta 1$ from the feedforward module 220.

Although in this example the adjustment module 210 implements rearranged Equation 3, other formulae may also be used in other embodiments. The choice of formula may, for example, be selected based upon a particular type of application.

In order for the feedforward signal $\delta 1$ to configure the power converter 110 to track a ramp in a power demand $P_{demand}$ effectively, the feedforward module 220 must also be updated to take into account the adjustment value $X_k$.

An adaptation of Equation 2 can then be used to incorporate the resultant from Equation 3, as shown in Equation 4.

$$P_{demand} = V_{cnv} \times V_t \times \frac{\sin(\delta 1)}{X_{cnv} + X_k}$$

Equation 4

The feedforward module 220 of the disclosure implements Equation 4, rearranged to resolve for the feedforward signal $\delta 1$. And, as can be seen, the adjustment value $X_k$ is needed to solve the equation fully. The adjustment value $X_k$ is provided to the feedforward module 220 by the adjustment module 210. Thus, in this manner, the adjustment module 210 and the feedforward module 220 form a first closed-loop control system 225. The feedforward signal $\delta 1$ is thus

automatically adjusted to compensate for differences in the power demand and the measured power during a change in the power demand.

In a start-up condition, a reference value for the adjustment value $X_k$ and the feedforward signal $\delta 1$ may be used.

Although in this example the feedforward module 220 implements rearranged Equation 4, other formulae may also be used in other embodiments. The choice of formula may, for example, be selected based upon a particular type of application.

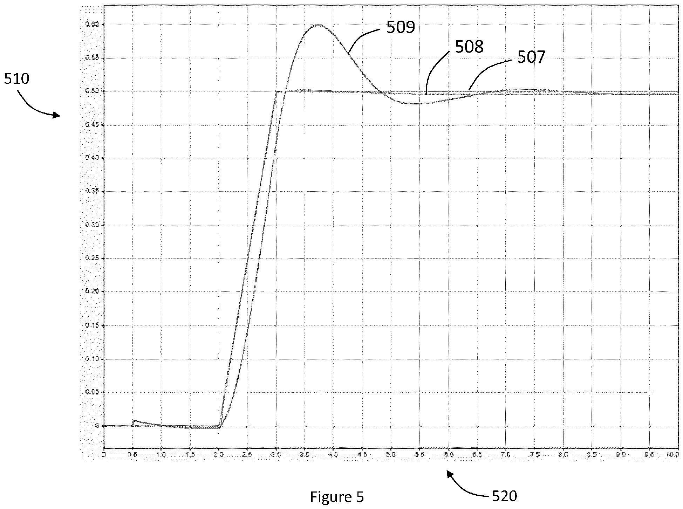

Figure 5 shows a seventh plot 507 of a power demand $P_{demand}$ provided to a power converter 110 connected to a weak grid, an eight plot 508 of a measured power $P_{meas}$ with the adjustment module 210 enabled to provide the adjustment value $X_k$, and a ninth plot 509 of a measured power $P_{meas}$ with the adjustment module 210 disabled. In Figure 5, the x-axis 520 is time in seconds and the y-axis 510 is power in per unit. As can be seen, when the adjustment module 210 is enabled, the measured power $P_{meas}$ tracks the power demand $P_{demand}$ considerably better compared to when the adjustment module 210 is disabled.

Because the adjustment module 210 and the feedforward module 220 form a closed-loop control system to determine the feedforward signal $\delta 1$, the phase angle command $\delta$ provided to the power converter 110 tends to improve the capability of the power converter 110 to output power (the measured power $P_{meas}$) that tracks the power demand $P_{demand}$ closely and accurately. In other words, the power converter 110 is more effective in providing the desired output power when operating in a grid-forming mode.

This also tends to improve the ability of the power converter 110 and controller 200 to recover from faults.

However, the adjustment module 210 may cause a further problem if the AC system is too weak, and the power converter 110 recovers the active power too quickly. Therefore, in an embodiment of this disclosure, the adjustment module 210 can be automatically disabled, if the adjustment value $X_k$ would cause the power converter 110 to operate in a manner that would have an undesirable impact on the AC grid 130.

To implement this, a comparator 280 may be included in the controller 200. The comparator 280 is connected to the output of the adjustment module 210, at a point between the adjustment module 210 and the feedforward module 220. As a result, the comparator 280 is able to modify the adjustment value $X_k$ if required.

The comparator 280 receives the adjustment value $X_k$, compares the adjustment value $X_k$ to a threshold value, and outputs the result to the feedforward module 220. If the adjustment value is equal to or below the threshold value, then the comparator 280 forwards the adjustment value $X_k$, determined by the adjustment module 210, to the feedforward module 220, and thereby enables the adjustment module 210. However, if the adjustment value $X_k$ is above the threshold value, then the comparator 280 updates the adjustment value $X_k$ to a reference value or to zero, and forwards the updated adjustment value to the feedforward module 220, and thereby disables the adjustment module 210. In this manner, the adjustment module 210 may be enabled or disabled.

In a further embodiment, the enabling or disabling of the adjustment module 210 is further determined based on a hysteresis, such that the adjustment module 210 is disabled if the adjustment value Xk is above a second threshold value, and the adjustment module 210 is enabled if the adjustment value Xk is equal to or below a third threshold.

Whilst the embodiments described herein disclose a DC source 120 and an AC grid 130, it is to be understood that these are but examples of an interconnect between a DC system and an AC system.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein also provides a converter controller that is operating in a synchronous grid forming mode, that is, the controller is controlling the converters AC voltage vector in phase and magnitude instantaneously independent of the phase and magnitude of the AC system as measured at the converters point of connection to the AC system. The converter automatically adjusts its voltage phase and magnitude to compensate for differences between a user demanded value, either active power or DC voltage, and the actual measured value to give an inertial response defined in a way that provides a decaying demand value violation and where the decay time is a user defined parameter.

This converter further includes a feed-forward term which modifies the inertial response of the converter to better track actual demand quantity changes, as opposed to sudden network events.

Further, the feed-forward term can automatically adjust the change it makes to the converter voltage phase to compensate for differences between the desired value and the measured value at any instance in time during the change in the demand value.

In a further enhancement the correction factor can be automatically disabled based on the magnitude of the correction factor.

In a further enhancement the correction factor can be automatically enabled based on the magnitude of the correction factor.

## Claims

1. A method of operating a controller (200) for providing grid-forming control of a power converter (110) connected to a grid (130), the method comprising:

   determining, by an adjustment module (210) of the controller, an adjustment value ($X_k$) based on a measured power ($P_{meas}$) and a feedforward signal ($\delta 1$), wherein the measured power ($P_{meas}$) is indicative of an amount of power output from the power converter (110);

   determining, by a feedforward module (220) of the controller, the feedforward signal ($\delta 1$) based on a power demand ($P_{demand}$) and the adjustment value ($X_k$), wherein the power demand ($P_{demand}$) is indicative of a demand for an amount of power to be output from the power converter;

   wherein the adjustment module (210) and the feedforward module (220) form a first closed-loop control system to determine the feedforward signal ($\delta 1$), such that the feedforward signal is automatically adjusted to compensate for differences in the power demand and the measured power during a change in the power demand; and

   determining, by the controller, a phase angle command ($\delta$) for the power converter (110) based on the feedforward signal ($\delta 1$).

2. The method of claim 1, further comprising:

   determining, by a control module (230) in the controller, a first control signal (240), based on the power demand, the measured power, and a measured frequency ($f_g$), wherein the measured frequency is a measure of a frequency component of the AC grid; and

   determining, by the controller, the phase angle command ($\delta$) for the power converter based on the feedforward

signal ($\delta$1) and the first control signal (240).

3. The method of claim 2, further comprising:

transforming, by a first transformation module (250) of the controller, the feedforward signal ($\delta$1), and outputting a transformed feedforward signal (255);
summing, by a summing component (260) of the controller, the first control signal (240) with the transformed feedforward signal (255), and outputting a second control signal ($\Delta\omega$); and
determining, by the controller, the phase angle command ($\delta$) based on the second control signal ($\Delta\omega$), such that the power converter is able to track changes in the power demand as well as power changes in the AC grid.

4. The method of claim 3, further comprising:
determining, by a second transformation module (270) of the controller, the phase angle command ($\delta$) by transforming the second control signal ($\Delta\omega$), and outputting the phase angle command ($\delta$) to the power converter.

5. The method of claim 2, 3 or 4, wherein the control module (230) comprises a second closed-loop control system (237) including an integral term.

6. The method of any preceding claim, wherein the adjustment module implements an equation comprising:

multiplying a grid voltage (Vt) with a power converter voltage (Vcnv) and the sine of the feedforward signal ($\delta$1) to determine a first product, and then dividing the first product by the measured power;
wherein the grid voltage is indicative of a voltage at a connection point between the power converter and the grid, and the power converter voltage is indicative of an output voltage of the power converter.

7. The method of any preceding claim, wherein the feedforward module implements an equation comprising:

summing a converter impedance (Xcnv) with the adjustment value (Xk) to determine a third product;
multiplying the third product by the power demand to determine a fourth product;
multiplying the power converter voltage (Vcnv) by a grid voltage (Vt) to determine a fifth product;
dividing the fourth product by the fifth product to determine a sixth product; and
determining the arcsine of the sixth product;
wherein the grid voltage is indicative of a voltage at a connection point between the power converter and the grid, and the power converter voltage is indicative of an output voltage of the power converter.

8. The method of any preceding claim, further comprising:

comparing, by a comparator (280) in the controller, the adjustment value with a first threshold value; and
enabling or disabling the adjustment module (210) based on the comparison.

9. The method of claim 8, wherein

if the adjustment value is equal to or below the first threshold value, then the comparator forwards the adjustment value, determined by the adjustment module, to the feedforward module, and thereby enables the adjustment module; and
if the adjustment value is above the first threshold value, then the comparator updates the adjustment value to a reference value or to zero, and forwards the updated adjustment value to the feedforward module, and thereby disables the adjustment module.

10. The method of claim 8 or 9, wherein the enabling or disabling of the adjustment module (210) is further determined based on a hysteresis, such that the adjustment module is disabled if the adjustment value (Xk) is above a second threshold value, and the adjustment module is enabled if the adjustment value (Xk) is equal to or below a third threshold.

11. A controller (200) for providing grid-forming control of a power converter (110) connected to a grid (130), the controller comprising:

an adjustment module (210) configured to determine an adjustment value (Xk) based on a measured power (Pmeas) and a feedforward signal ($\delta 1$), wherein the measured power (Pmeas) is indicative of the amount of power output from the power converter; and

a feedforward module (220) configured to determine the feedforward signal ($\delta 1$) based on a power demand (Pdemand) and the adjustment value (Xk), wherein the power demand is indicative of a demand for an amount of power to be output from the power converter;

wherein the adjustment module (210) and the feedforward module (220) form a first closed-loop control system configured to determine the feedforward signal ($\delta 1$), such that the feedforward signal is automatically adjusted to compensate for differences between the power demand and the measured power during a change in the power demand; and

the controller is further configured to determine a phase angle command ($\delta$) for the power converter based on the feedforward signal ($\delta 1$).

12. The controller of claim 11, further comprising:

a control module (230) configured to determine a first control signal (240), based on the power demand, the measured power, and a measured frequency (fg), wherein the measured frequency is a measure of a frequency component of the AC grid; and

a first transformation module (250) configured to transform the feedforward signal to a transformed feedforward signal (255);

wherein the controller is further configured to sum the first control signal (240) with the transformed feedforward signal (255) to output a second control signal ($\Delta\omega$), and determine the phase angle command ($\delta$) based on the second control signal ($\Delta\omega$), such that the power converter is able to track changes in the power demand as well as power changes in the AC grid.

13. The controller of claim 11 or 12, further comprising:

a comparator configured to compare the adjustment value with a threshold value;

wherein if the adjustment value is equal to or below the threshold value, then the comparator is configured to forward the adjustment value, determined by the adjustment module, to the feedforward module, and thereby enable the adjustment module; and

wherein if the adjustment value is above the threshold value, then the comparator is configured to update the adjustment value to a reference value or to zero, and forward the updated adjustment value to the feedforward module, and thereby disable the adjustment module.

14. A power converter (110) comprising:

a DC side (110a) for connection to a DC source (120);
an AC side (110b) for connection to an AC grid (130); and
the controller (200) of any one of claims 11 to 13.

15. A computer program comprising instructions which when executed by a processor of a controller for controlling a power converter, cause the controller to perform the method of any one of claims 1 to 10.

**Patentansprüche**

1. Verfahren zum Betreiben einer Steuereinheit (200) zum Bereitstellen netzbildender Steuerung eines an ein Netz (130) angeschlossenen Leistungswandlers (110), wobei das Verfahren Folgendes umfasst:

Bestimmen, durch ein Einstellmodul (210) der Steuereinheit, eines Einstellwerts (Xk) basierend auf einer gemessenen Leistung (Pmeas) und eines Vorkopplungssignals ($\delta 1$), wobei die gemessene Leistung (Pmeas) eine Leistungsausgangsmenge vom Leistungswandler (110) angibt;

Bestimmen, durch ein Vorkopplungsmodul (220) der Steuereinheit, des Vorkopplungssignals ($\delta 1$) basierend auf einem Leistungsbedarf (Pdemand) und dem Einstellwert (Xk), wobei der Leistungsbedarf (Pdemand) einen Bedarf an einer vom Leistungswandler auszugebenden Leistungsmenge angibt;

wobei das Einstellmodul (210) und das Vorkopplungsmodul (220) ein erstes geschlossenes Steuerungssystem bilden, um das Vorkopplungssignal ($\delta 1$) zu bestimmen, sodass das Vorkopplungssignal automatisch angepasst wird, um Unterschiede zwischen dem Leistungsbedarf und der gemessenen Leistung während einer Änderung

EP 4 557 593 B1

des Leistungsbedarfs auszugleichen; und
Bestimmen, durch die Steuereinheit, eines Phasenwinkelbefehls ($\delta$) für den Leistungswandler (110) basierend auf dem Vorkopplungssignal ($\delta 1$).

2. Verfahren nach Anspruch 1, ferner umfassend:

Bestimmen, durch ein Steuerungsmodul (230) in der Steuereinheit, eines ersten Steuersignals (240) basierend auf dem Leistungsbedarf, der gemessenen Leistung und einer gemessenen Frequenz (fg), wobei die gemessene Frequenz ein Maß für eine Frequenzkomponente des Wechselstromnetzes ist; und
Bestimmen, durch die Steuereinheit, des Phasenwinkelbefehls ($\delta$) für den Leistungswandler basierend auf dem Vorkopplungssignal ($\delta 1$) und dem ersten Steuersignal (240).

3. Verfahren nach Anspruch 2, ferner umfassend:

Transformieren, durch ein erstes Transformationsmodul (250) der Steuereinheit, des Vorkopplungssignals ($\delta 1$) und Ausgeben eines transformierten Vorkopplungssignals (255);
Summieren, durch eine Summierkomponente (260) der Steuereinheit, des ersten Steuersignals (240) mit dem transformierten Vorkopplungssignal (255) und Ausgeben eines zweiten Steuersignals ($\Delta \omega$); und
Bestimmen, durch die Steuereinheit, des Phasenwinkelbefehls ($\delta$) basierend auf dem zweiten Steuersignal ($\Delta \omega$), sodass der Leistungswandler sowohl Änderungen im Leistungsbedarf als auch Leistungsänderungen im Wechselstromnetz folgen kann.

4. Verfahren nach Anspruch 3, ferner umfassend:
Bestimmen, durch ein zweites Transformationsmodul (270) der Steuereinheit, des Phasenwinkelbefehls (i) durch Transformieren des zweiten Steuersignals ($\Delta \omega$) und Ausgeben des Phasenwinkelbefehls ($\delta$) an den Leistungswandler.

5. Verfahren nach Anspruch 2, 3 oder 4, wobei das Steuerungsmodul (230) ein zweites geschlossenes Steuerungssystem (237) umfasst, das ein Integralglied beinhaltet.

6. Verfahren nach einem vorstehenden Anspruch, wobei das Einstellmodul eine Gleichung implementiert, die Folgendes umfasst:

Multiplizieren einer Netzspannung (Vt) mit einer Leistungswandlerspannung (Vcnv) und dem Sinus des Vorkopplungssignals ($\delta 1$), um ein erstes Produkt zu bestimmen, und anschließendes Dividieren des ersten Produkts durch die gemessene Leistung;
wobei die Netzspannung eine Spannung an einem Verbindungspunkt zwischen dem Leistungswandler und dem Netz angibt und die Leistungswandlerspannung eine Ausgangsspannung des Leistungswandlers angibt.

7. Verfahren nach einem vorstehenden Anspruch, wobei das Vorkopplungsmodul eine Gleichung implementiert, die Folgendes umfasst:

Summieren einer Wandlerimpedanz (Xcnv) mit dem Einstellwert (Xk) zum Bestimmen eines dritten Produkts;
Multiplizieren des dritten Produkts mit dem Leistungsbedarf zum Bestimmen eines vierten Produkts;
Multiplizieren der Leistungswandlerspannung (Vcnv) mit einer Netzspannung (Vt) zum Bestimmen eines fünften Produkts;
Dividieren des vierten Produkts durch das fünfte Produkt zum Bestimmen eines sechsten Produkts; und
Bestimmen des Arkussinus des sechsten Produkts;
wobei die Netzspannung eine Spannung an einem Verbindungspunkt zwischen dem Leistungswandler und dem Netz angibt und die Leistungswandlerspannung eine Ausgangsspannung des Leistungswandlers angibt.

8. Verfahren nach einem vorstehenden Anspruch, das weiter Folgendes umfasst:

Vergleichen, durch einen Komparator (280) in der Steuereinheit, des Einstellwerts mit einem ersten Schwellenwert; und
Aktivieren oder Deaktivieren des Einstellmoduls (210) basierend auf dem Vergleich.

9. Verfahren nach Anspruch 8, wobei

wenn der Einstellwert gleich oder kleiner als der erste Schwellenwert ist, der Komparator den vom Einstellmodul bestimmten Einstellwert an das Vorkopplungsmodul weiterleitet und dadurch das Einstellmodul aktiviert; und wenn der Einstellwertgrößer als der erste Schwellenwert ist, der Komparator den Einstellwert auf einen Referenzwert oder auf Null aktualisiert und den aktualisierten Einstellwert an das Vorkopplungsmodul weiterleitet und dadurch das Einstellmodul deaktiviert.

10. Verfahren nach Anspruch 8 oder 9, wobei das Aktivieren oder Deaktivieren des Einstellmoduls (210) ferner basierend auf einer Hysterese bestimmt wird, sodass das Einstellmodul deaktiviert wird, wenn der Einstellwert (Xk) größer als ein zweiter Schwellenwert ist, und das Einstellmodul aktiviert wird, wenn der Einstellwert (Xk) gleich oder kleiner als ein dritter Schwellenwert ist.

11. Steuereinheit (200) zum Bereitstellen netzbildender Steuerung eines an ein Netz (130) angeschlossenen Leistungswandlers (110), wobei die Steuereinheit Folgendes umfasst:

ein Einstellmodul (210) das zum Bestimmen eines Einstellwerts (Xk) basierend auf einer gemessenen Leistung (Pmeas) und eines Vorkopplungssignals ($\delta$1) konfiguriert ist, wobei die gemessene Leistung (Pmeas) die Leistungsausgangsmenge vom Leistungswandler angibt; und
ein Vorkopplungsmodul (220), das zum Bestimmen des Vorkopplungssignals ($\delta$1) basierend auf einem Leistungsbedarf (Pdemand) und dem Einstellwert (Xk) konfiguriert ist, wobei der Leistungsbedarf einen Bedarf an einer vom Leistungswandler auszugebenden Leistungsmenge angibt;
wobei das Einstellmodul (210) und das Vorkopplungsmodul (220) ein erstes geschlossenes Steuerungssystem bilden, das zum Bestimmen des Vorkopplungssignals ($\delta$1) konfiguriert ist, sodass das Vorkopplungssignal automatisch angepasst wird, um Unterschiede zwischen dem Leistungsbedarf und der gemessenen Leistung während einer Änderung des Leistungsbedarfs auszugleichen; und
die Steuereinheit ferner zum Bestimmen eines Phasenwinkelbefehls ($\delta$) für den Leistungswandler basierend auf dem Vorkopplungssignal ($\delta$1) konfiguriert ist.

12. Steuereinheit nach Anspruch 11, ferner umfassend:

ein Steuerungsmodul (230), das zum Bestimmen eines ersten Steuersignals (240) basierend auf dem Leistungsbedarf, der gemessenen Leistung und einer gemessenen Frequenz (fg) konfiguriert ist, wobei die gemessene Frequenz ein Maß für eine Frequenzkomponente des Wechselstromnetzes ist; und
ein erstes Transformationsmodul (250), das zum Transformieren des Vorkopplungssignals in ein transformiertes Vorkopplungssignal (255) konfiguriert ist;
wobei die Steuereinheit ferner zum Summieren des ersten Steuersignals (240) mit dem transformierten Vorkopplungssignal (255), um ein zweites Steuersignal ($\Delta\omega$) auszugeben, und Bestimmen des Phasenwinkelbefehls ($\delta$) basierend auf dem zweiten Steuersignal ($\Delta\omega$) konfiguriert ist, sodass der Leistungswandler in der Lage ist, Änderungen im Leistungsbedarf sowie Leistungsänderungen im Wechselstromnetz zu verfolgen.

13. Steuereinheit nach Anspruch 11 oder 12, ferner umfassend:

einen Komparator, der zum Vergleichen des Einstellwerts mit einem Schwellenwert konfiguriert ist;
wobei, wenn der Einstellwert gleich oder kleiner als der Schwellenwert ist, der Komparator zum Weiterleiten des vom Einstellmodul bestimmten Einstellwerts an das Vorkopplungsmodul und dadurch Aktivieren des Einstellmoduls konfiguriert ist; und
wobei, wenn der Einstellwert größer als der Schwellenwert ist, der Komparator zum Aktualisieren des Einstellwerts auf einen Referenzwert oder auf Null und Weiterleiten des aktualisierten Einstellwerts an das Vorkopplungsmodul und dadurch Deaktivieren des Einstellmoduls konfiguriert ist.

14. Leistungswandler (110), umfassend:

eine Gleichstromseite (110a) zur Verbindung mit einer Gleichstromquelle (120);
eine Wechselstromseite (110b) zur Verbindung mit einem Wechselstromnetz (130); und
die Steuereinheit (200) nach einem der Ansprüche 11 bis 13.

15. Computerprogramm, das Anweisungen umfasst, die, wenn sie von einem Prozessor einer Steuereinheit zum Steuern eines Leistungswandlers ausgeführt werden, die Steuereinheit veranlassen, das Verfahren nach einem der Ansprüche 1 bis 10 durchzuführen.

EP 4 557 593 B1

**Revendications**

1. Procédé de fonctionnement d'un dispositif de commande (200) pour la fourniture d'une commande de formation de réseau d'un convertisseur de puissance (110) connecté à un réseau (130), le procédé comprenant :

    la détermination, par un module de réglage (210) du dispositif de commande, d'une valeur de réglage (Xk) sur la base d'une puissance mesurée (Pmeas) et d'un signal d'anticipation ($\delta 1$), dans lequel la puissance mesurée (Pmeas) est indicative d'une quantité de puissance délivrée par le convertisseur de puissance (110) ;
    la détermination, par un module d'anticipation (220) du dispositif de commande, du signal d'anticipation ($\delta 1$) sur la base d'une demande de puissance (Pdemand) et de la valeur de réglage (Xk), dans lequel la demande de puissance (Pdemand) est indicative d'une demande d'une quantité de puissance à délivrer par le convertisseur de puissance ;
    dans lequel le module de réglage (210) et le module d'anticipation (220) forment un premier système de commande en boucle fermée pour déterminer le signal d'anticipation ($\delta 1$), de sorte que le signal d'anticipation est automatiquement réglé pour compenser des différences entre la demande de puissance et la puissance mesurée lors d'une variation de la demande de puissance ; et
    la détermination, par le dispositif de commande, d'une commande d'angle de phase ($\delta$) pour le convertisseur de puissance (110) sur la base du signal d'anticipation ($\delta 1$).

2. Procédé selon la revendication 1, comprenant en outre :

    la détermination, par un module de commande (230) du dispositif de commande, d'un premier signal de commande (240), sur la base de la demande de puissance, de la puissance mesurée et d'une fréquence mesurée (fg), dans lequel la fréquence mesurée est une mesure d'une composante de fréquence du réseau en CA ; et
    la détermination, par le dispositif de commande, de la commande d'angle de phase ($\delta$) pour le convertisseur de puissance sur la base du signal d'anticipation ($\delta 1$) et du premier signal de commande (240).

3. Procédé selon la revendication 2, comprenant en outre :

    la transformation, par un premier module de transformation (250) du dispositif de commande, du signal d'anticipation ($\delta 1$), et la délivrance d'un signal d'anticipation transformé (255) ;
    l'addition, par un composant d'addition (260) du dispositif de commande, du premier signal de commande (240) avec le signal d'anticipation transformé (255), et la délivrance d'un deuxième signal de commande ($\Delta\omega$) ; et
    la détermination, par le dispositif de commande, de la commande d'angle de phase ($\delta$) sur la base du deuxième signal de commande ($\Delta w$), de sorte que le convertisseur de puissance est capable de suivre des variations de la demande de puissance ainsi que des variations de puissance dans le réseau en CA.

4. Procédé selon la revendication 3, comprenant en outre :
la détermination, par un deuxième module de transformation (270) du dispositif de commande, de la commande d'angle de phase ($\delta$) en transformant le deuxième signal de commande ($\Delta\omega$), et la délivrance de la commande d'angle de phase ($\delta$) au convertisseur de puissance.

5. Procédé selon la revendication 2, 3 ou 4, dans lequel le module de commande (230) comprend un deuxième système de commande en boucle fermée (237) incluant un terme intégral.

6. Procédé selon une quelconque revendication précédente, dans lequel le module de réglage met en œuvre une équation comprenant :

    la multiplication d'une tension de réseau (Vt) avec une tension de convertisseur de puissance (Vcnv) et le sinus du signal d'anticipation ($\delta 1$) pour déterminer un premier produit, puis diviser le premier produit par la puissance mesurée ;
    dans lequel la tension du réseau est indicative d'une tension à un point de raccordement entre le convertisseur de puissance et le réseau, et la tension du convertisseur de puissance est indicative d'une tension de sortie du convertisseur de puissance.

7. Procédé selon une quelconque revendication précédente, dans lequel le module d'anticipation met en œuvre une équation comprenant :

l'addition d'une impédance du convertisseur (Xcnv) avec la valeur de réglage (Xk) pour déterminer un troisième produit ;
la multiplication du troisième produit par la demande de puissance pour déterminer un quatrième produit ;
la multiplication de la tension du convertisseur de puissance (Vcnv) par une tension de réseau (Vt) pour déterminer un cinquième produit ;
la division du quatrième produit par le cinquième produit pour déterminer un sixième produit ; et
la détermination de l'arc sinus du sixième produit ;
dans lequel la tension du réseau est indicative d'une tension à un point de raccordement entre le convertisseur de puissance et le réseau, et la tension du convertisseur de puissance est indicative d'une tension de sortie du convertisseur de puissance.

8. Procédé selon une quelconque revendication précédente, comprenant en outre :

la comparaison, par un comparateur (280) dans le dispositif de commande, de la valeur de réglage avec une première valeur seuil ; et
l'activation ou la désactivation du module de réglage (210) sur la base de la comparaison.

9. Procédé selon la revendication 8, dans lequel

si la valeur de réglage est inférieure ou égale à la première valeur seuil, le comparateur transmet la valeur de réglage, déterminée par le module de réglage, au module d'anticipation, et active ainsi le module de réglage ; et
si la valeur de réglage est supérieure à la première valeur seuil, le comparateur actualise la valeur de réglage à une valeur de référence ou à zéro, et transmet la valeur de réglage actualisée au module d'anticipation, et désactive ainsi le module de réglage.

10. Procédé selon la revendication 8 ou 9, dans lequel l'activation ou la désactivation du module de réglage (210) est en outre déterminée sur la base d'une hystérésis, de sorte que le module de réglage est désactivé si la valeur de réglage (Xk) est supérieure à une deuxième valeur seuil, et le module de réglage est activé si la valeur de réglage (Xk) est inférieure ou égale à un troisième seuil.

11. Dispositif de commande (200) pour la fourniture d'une commande de formation de réseau d'un convertisseur de puissance (110) connecté à un réseau (130), le dispositif de commande comprenant :

un module de réglage (210) configuré pour déterminer une valeur de réglage (Xk) sur la base d'une puissance mesurée (Pmeas) et d'un signal d'anticipation ($\delta 1$), dans lequel la puissance mesurée (Pmeas) est indicative de la quantité de puissance en sortie du convertisseur de puissance ; et
un module d'anticipation (220) configuré pour déterminer le signal d'anticipation ($\delta 1$) sur la base d'une demande de puissance (Pdemand) et de la valeur de réglage (Xk), dans lequel la demande de puissance est indicative d'une demande d'une quantité de puissance à délivrer en sortie du convertisseur de puissance ;
dans lequel le module de réglage (210) et le module d'anticipation (220) forment un premier système de commande en boucle fermée configuré pour déterminer le signal d'anticipation ($\delta 1$), de sorte que le signal d'anticipation est automatiquement réglé pour compenser des différences entre la demande de puissance et la puissance mesurée lors d'une variation de la demande de puissance ; et
le dispositif de commande est en outre configuré pour déterminer une commande d'angle de phase ($\delta$) pour le convertisseur de puissance sur la base du signal d'anticipation ($\delta 1$).

12. Dispositif de commande selon la revendication 11, comprenant en outre :

un module de commande (230) configuré pour déterminer un premier signal de commande (240), sur la base de la demande de puissance, de la puissance mesurée et d'une fréquence mesurée (fg), dans lequel la fréquence mesurée est une mesure d'une composante de fréquence du réseau en CA ; et
un premier module de transformation (250) configuré pour transformer le signal d'anticipation en un signal d'anticipation transformé (255) ;
dans lequel le dispositif de commande est en outre configuré pour additionner le premier signal de commande (240) avec le signal d'anticipation transformé (255) pour délivrer un deuxième signal de commande ($\Delta\omega$), et déterminer la commande d'angle de phase ($\delta$) sur la base du deuxième signal de commande ($\Delta\omega$), de sorte que le convertisseur de puissance peut suivre des variations de la demande de puissance ainsi que des variations de puissance dans le réseau en CA.

**13.** Dispositif de commande selon la revendication 11 ou 12, comprenant en outre :

un comparateur configuré pour comparer la valeur de réglage avec une valeur seuil ;
dans lequel, si la valeur de réglage est inférieure ou égale à la valeur seuil, le comparateur est configuré pour transmettre la valeur de réglage, déterminée par le module de réglage, au module d'anticipation, et ainsi activer le module de réglage ; et
dans lequel si la valeur de réglage est supérieure à la valeur seuil, le comparateur est configuré pour actualiser la valeur de réglage à une valeur de référence ou à zéro, et transmettre la valeur de réglage actualise au module d'anticipation, et désactiver ainsi le module de réglage.

**14.** Convertisseur de puissance (110) comprenant :

un côté CC (110a) pour le raccordement à une source de CC (120) ;
un côté CA (110b) pour le raccordement à un réseau en CA (130) ; et
le dispositif de commande (200) selon l'une quelconque des revendications 11 à 13.

**15.** Programme informatique comprenant des instructions qui, lorsqu'elles sont exécutées par un processeur d'un dispositif de commande destiné à commander un convertisseur de puissance, amènent le dispositif de commande à exécuter le procédé selon l'une quelconque des revendications 1 à 10.

Figure 1

210   280

$$\frac{V_{cnv}\,V_t}{P_{meas}}\ \sin\delta1$$

$>$

225

Xk   220

$$Sin^{-1}\left[\frac{P_{demand}\cdot X_{cnv}}{V_{cnv}\cdot V_t}\right]$$

δ1   s   250   255

$$G\frac{sT}{1+sT}$$   237

260   $\delta_{max}$

$P_{demand}$   Σ   $\frac{1}{2Hs}$   $2\pi f_n$   $\omega_{VR}$   Σ   Σ   $\Delta\omega$   $\frac{1}{s}$   $\delta$

$P_{meas}$

235   $f_g$   $2\pi$   $\omega_g$

240   $\delta_{min}$   270

200   230

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022090578 A1

**Non-patent literature cited in the description**

- **D'ARCO SALVATORE et al.** Improving the Power Reference Tracking of Virtual Synchronous Machines by Feed-Forward Control. *XP033916275*

- *Guide for Planning DC Links Terminating at AC Systems Locations having Low Short-Circuit Capabilities; Part 1: ACDC Interaction Phenomena*, June 1992